Europäisches Patentamt

European Patent Office

Office européen des brevets

(19)

(11)  **EP 1 239 612 A2**

(12)  **EUROPÄISCHE PATENTANMELDUNG**

(43) Veröffentlichungstag:
     **11.09.2002   Patentblatt 2002/37**

(51) Int Cl.7: **H04B 10/08**

(21) Anmeldenummer: **02100209.2**

(22) Anmeldetag: **01.03.2002**

(84) Benannte Vertragsstaaten:
     **AT BE CH CY DE DK ES FI FR GB GR IE IT LI LU
     MC NL PT SE TR**
     Benannte Erstreckungsstaaten:
     **AL LT LV MK RO SI**

(30) Priorität: **09.03.2001   DE 10111497**

(71) Anmelder: **SIEMENS AKTIENGESELLSCHAFT
     80333 München (DE)**

(72) Erfinder:
     • **Elbers, Jörg-Peter, Dr.
       81249 München (DE)**
     • **Färbert, Andreas, Dr.
       81825 München (DE)**
     • **Glingener, Christoph, Dr.
       83620 Feldkirchen-Westerham (DE)**
     • **Scheerer, Christian, Dr.
       Ottawa, Ontario K1S 2S4 (CA)**

(54)   **Verfahren zur Ermittlung der Signalqualität bei optischen Übertragungssystemen**

(57)   Durch Messen von Amplitudenhistogrammen eines Signals ($S_E$) und durch Berechnen von charakteristischen Histogramm-Momenten ($\mu_0$ und $\mu_1$, $\sigma_0$ und $\sigma_1$) wird der effektive Signal-Rausch-Abstand ($OSNR_{eff}$) ermittelt. Durch Vergleich der charakteristischen Histogramm-Momente ($\mu_0$ und $\mu_1$, $\sigma_0$ und $\sigma_1$) mit dem optischen Signal-Rausch-Abstand (OSNR) werden zusätzliche Störungen festgestellt.

# FIG 6

**EP 1 239 612 A2**

**Beschreibung**

Die Erfindung betrifft ein Verfahren zur Ermittlung der Signalqualität bei optischen Übertragungssystemen und zur Ermittlung von störenden Effekten.

Zukünftig werden Übertragungsnetze als optische Netze realisiert, über die Daten mit höchsten Bitraten im Wellenlängen-Multiplexverfahren übertragen werden. Dabei wird eine weitgehende Transparenz der Netze angestrebt. Bei der erforderlichen Überwachung der Signalqualität kann dann jedoch nicht mehr eine Verletzung von Coderegeln, beispielsweise bei Fehler korrigierenden Codes, festgestellt werden. Deshalb werden Verfahren entwickelt, die hiervon unabhängig eine Beurteilung der Signalqualität ermöglichen.

In einem in der Offenlegungsschrift DE 195 04 856 beschriebenen Verfahren werden asynchron zum Signaltakt Amplitudenstichproben entnommen und daraus die zentralen Momente der Stichprobe berechnet. Diese werden dann mit empirisch gewonnenen Referenzwerten verglichen, um daraus eine Aussage über die Signalqualität abzuleiten.

In der Patentanmeldung DE 198 12 078 wird ein weiteres Verfahren zur Bestimmung der Signalqualität angegeben, mit dem es möglich ist, zuverlässige Aussagen über die Signalqualität zu machen. Bei diesem Verfahren werden die äußeren Flanken eines Histogramms ausgewertet, das die Wahrscheinlichkeit des Auftretens von verschiedenen die logischen Zustände 0 und 1 repräsentierende Spannungswerten angibt.

In einer älteren Anmeldung DE 199 14 793 wird dieses Verfahren weiter entwickelt. Die Meßanordnungen gestatten hierbei nicht nur eine Verschiebung der Schwellen, sondern auch eine Verschiebung der Abtastzeitpunkte, wodurch die Augenöffnung bestimmt werden kann. Die Ermittlung der Verteilungsdichten der Abtastwerte als Funktion der Amplitudenwerte erfolgt durch Ableitung einer Wahrscheinlichkeitsverteilung, die die Häufigkeit des Auftretens eines der beiden Binärzustände als Funktion der Abtastschwelle angibt.

Es wird ebenfalls versucht, aus den Histogrammen Erkenntnisse über störende Einflüsse auf der Übertragungsstrecke zu gewinnen. Wenn jedoch verschiedene störende Effekte gleichzeitig auftreten reicht die Auswertung der Wahrscheinlichkeitsdichteverteilung zur Identifizierung und Quantifizierung der Effekte aus. Bei der gleichzeitigen Übertragung von mehreren Signalen auftretende Mehrkanaleffekte wie Kreuzphasenmodulation (XPM), Vier-Wellen-Mischung (FWM), stimulierter Raman Übersprechen (SRS-XT) und koherentes/inkoherentes Übersprechen (XT) bewirken alle im statistischen Mittel eine gaußförmige Verbreiterung der Wahrscheinlichkeitsdichteverteilung von Abtastamplituden und sind somit ununterscheidbar.

Aufgabe der Erfindung ist es, ein Verfahren anzugeben, mit dem die Signalqualität bestimmt werden kann und damit die wesentlichen Übertragungseigenschaften ermittelt werden können. Weiter sollen störende Effekte erkannt und deren Größe festgestellt werden.

Ein solches Verfahren wird in dem Patentanspruch 1 beschrieben.

Vorteilhafte Weiterbildungen der Erfindung sind in den Unteransprüchen angegeben.

Der wesentliche Vorteil des erfindungsgemäßen Verfahrens besteht darin, dass durch Histogrammmmessungen auf den effektiven Rauschabstand eines Signals geschlossen werden kann. Durch eine zusätzliche Rauschabstandsmessung kann eine zuverlässige Aussage über das Vorliegen von zusätzlichen Störeffekten gemacht werden kann, die dann genauer untersucht werden können.

Aufgrund von Berechnungen oder von Vergleichsmessungen mit einem nur durch Rauschen gestörtem System können Aussagen über die Größe der zusätzlichen Störeinflüsse gemacht werden.

Insbesondere durch mathematische Umformungen wird ein einfacher Vergleich zwischen gemessenen Histogrammwerten und berechneten oder gemessenen Vergleichswerten möglich, da ein Mittelwerte und Varianzen der Abtastamplituden-Verteilungen der binären Zustände enthaltender Histogramm-Momente-Term linear vom Rauschabstand abhängig ist.

Die Erfindung wird anhand eines Ausführungsbeispiels näher erläutert.

Es zeigen:

Figur 1    eine bekannte Meßanordnung zur Erzeugung von Amplitudenhistogrammen,
Figur 2    ein Amplitudenhistogramm,
Figur 3    ein Prinzipschaltbild eines optischen Empfängers,
Figur 4    Amplitudenhistogramme für verschiedene Signal-Rausch-Abstände
Figur 5    eine Meßanordnung und
Figur 6    ein Histogramm-Rauschabstand-Diagramm.

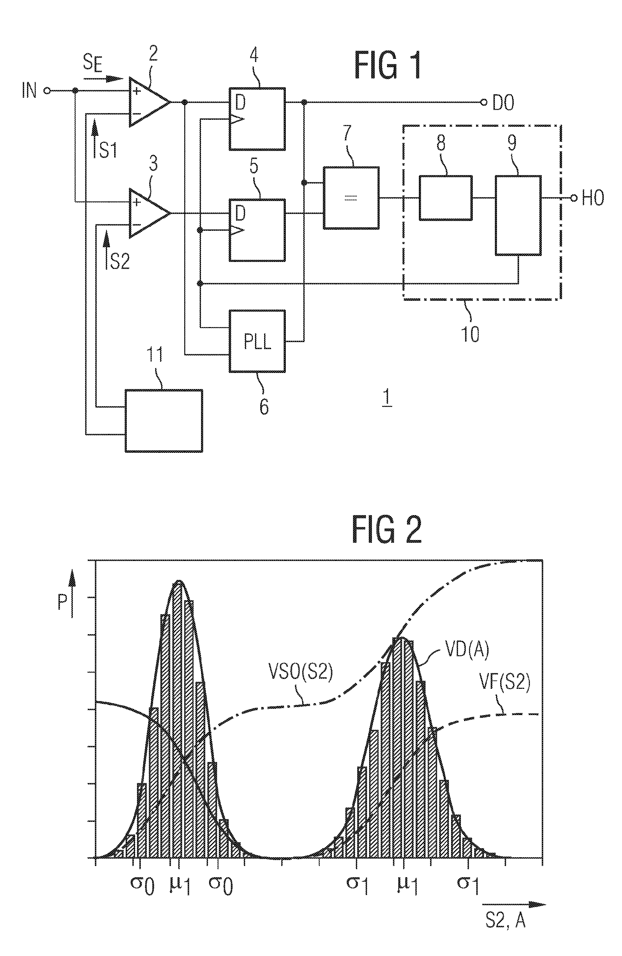

Die in Figur 1 dargestellte bekannte Messeinrichtung 1 für Amplitudenhistogramme dient zum Bestimmen der Wahrscheinlichkeitsdichteverteilung von Abtastwerten durch Messungen bei unterschiedlichen Abtastschwellen.

Die Messeinrichtung 1 enthält zwei Entscheiderstufen 2 und 3, deren ersten Eingängen über einen Datensignaleingang IN ein bereits umgesetztes elektrisches Signal $S_E$ zugeführt wird, das z. B. zuvor als optisches Signal über einen Streckenabschnitt oder die gesamte Übertragungsstrecke übertragen wurde. Die Entscheiderschwelle mindestens einer der Entscheiderstufen 2 und 3 ist über eine Steuerung 11 einstellbar; hier durch anlegen von Vergleichsspannungen, die Schwellwerten S1 und S2 entsprechen.

Die Ausgänge der Entscheiderstufen sind jeweils mit einer Abtastkippstufe 4 bzw. 5 verbunden, deren Datenausgänge einem Exclusiv-ODER-Gatter 7 zugeführt sind. Der Ausgang dieses Gatters ist mit einem Fehlerzähler 8 verbunden, die wie eine Rechenschaltung 9 Teil eines Histogramm-Rechners 10 ist.

Außerdem ist ein Taktregenerator 6 vorgesehen, der mittels einer Phasenregelschleife aus dem empfangenen Datensignal das Bittaktsignal TS regeneriert.

Das elektrische Signal $S_E$ wird parallel mit unterschiedlichen Schwellwerten S1 und S2 verglichen, abgetastet und als Binärwerte gespeichert. Mit der Meßeinrichtung können unterschiedliche Messungen durchgeführt werden. Ein Schwellwert S1 kann als Soll-Schwellwert konstant gehalten und der andere Schwellwert S2 variiert werden. Die bei unterschiedlichen Schwellwerten S2 auftretenden "Fehler" FE (unterschiedliche Abtastzustände 0 und 1 in den Abtastkippstufen; Fig. 1) werden ausgewertet, wobei eine Gleichverteilung von logischen Nullen und Einsen vorausgesetzt wird oder die Verteilung gemessen wird. Die auf die insgesamt empfangenen Bits bezogenen Fehler ergeben die in Figur 2 gestrichelt dargestellte Fehlerraten-Verteilung VF als Funktion des Schwellwertes S2. Diese kann in eine Wahrscheinlichkeitsdichte-Verteilung VD, also in eine Abtastamplituden-Verteilung für "0'en" und "1'en" umgerechnet werden. Die Balken im Amplitudenhistogramm Figur 2 geben die (relative) Anzahl von Abtastwerten für die logischen Zustände "0" und "1" an, die zwischen äquidistanten Werten auftreten. Die Mittelwerte sind mit $\mu_0$ und $\mu_1$, die Standardabweichungen (Momente) mit $\sigma_0$ und $\sigma_1$ bezeichnet. Amplitudenhistogramme können als Funktion des Schwellwertes S2 oder der Abtastamplitude A (Spannungswerte oder entsprechende Stromwerte eines optoelektrischen Wandlers) aufgezeichnet werden. Auf der Ordinate sind jeweils die relativen Häufigkeiten P aufgetragen. Der Abtastzeitpunkt wird konstant gehalten. Es sind aber auch vom Schwellwert und der Phasenlage des Abtasttaktes abhängige Histogramme erstellbar, worauf in dem Ausführungsbeispiel aber nicht näher eingegangen wird.

Es können auch ebenso Erwartungswerte VS0 für das auftreten von logischen Nullen (oder logischen Einsen) in Abhängigkeit von der variablen Schwelle S2 ermittelt werden, die in Figur 2 als normierte Funktion VS0 strichpunktiert dargestellt ist, und durch Differenzieren in die Amplitudenverteilung VD umgerechnet werden kann.

Das abgetastete Datensignal wird am Datenausgang DO ausgegeben, die charakteristischen Histogrammdaten jeweils am Ende einer ausreichend langen Meßperiode am Ausgang HO des Histogrammrechners.

Es ist ebenfalls möglich, die Verteilung der Abtastamplituden direkt zu messen. Dazu wird ein Speicheroszilloskop mit einem optischen Eingang oder einem vorgeschalteten opto-elektrischen Wandler benötigt, das zu einem einstellbaren Abtastzeitpunkt das empfangene Signal bezüglich seiner Amplitude (Augendiagramm) aufzeichnet und statistisch auswertet.

Für die weiteren Betrachtungen kann jedes der Ampltudenhistogramme, die Fehlerraten-Verteilung FE, eine Wahrscheinlichkeits-Verteilung VS0 für einen logischen Zustand als auch Wahrscheinlichkeitsdichte-Verteilung VD, herangezogen werden, da diese ineinander überführt werden können.

Zur Beurteilung der Signal- oder Übertragungsqualität wird das Amplitudenhistogramm aufgenommen und anschließend werden die charakteristischen Histogramm-Momente, Mittelwerte und Varianz, ermittelt.

Daraus kann - wie noch dargelegt wird - der effektive Signal-Rausch-Abstand ermittelt werden. Es kann eine weitere direkte Messung des Rauschabstandes mit einem optischen Spektrumsanalysator und ein Vergleich dieses direkt gemessenen Rauschabstandes mit den aus den charakteristischen Histogramm-Momente ermittelten effektiven Rauschabstand folgen. Liegen einander für ein optimales System entsprechende Werte vor, weist das System - bis auf das Rauschen - keine weiteren Störeinflüsse auf.

Entspricht der aus dem Amplitudenhistogramm ermittelte effektive Signal-Rausch-Abstand aber einem geringeren als den direkt gemessenen Signal-Rausch-Abstand, dann liegen zusätzliche Beeinträchtigungen durch nichtlineare Effekte vor.

Der Zusammenhang zwischen den charakteristischen Momenten $\mu$ und $\sigma$ des Histogramms und dem Rauschabstand kann durch Messungen an einem idealen System ermittelt werden. Er kann ebenso anhand der folgenden Ausführungen berechnet werden. Hierdurch werden auch die Zusammenhänge zwischen den charakteristischen Werten des Histogrammms und dem Rauschabstand deutlich.

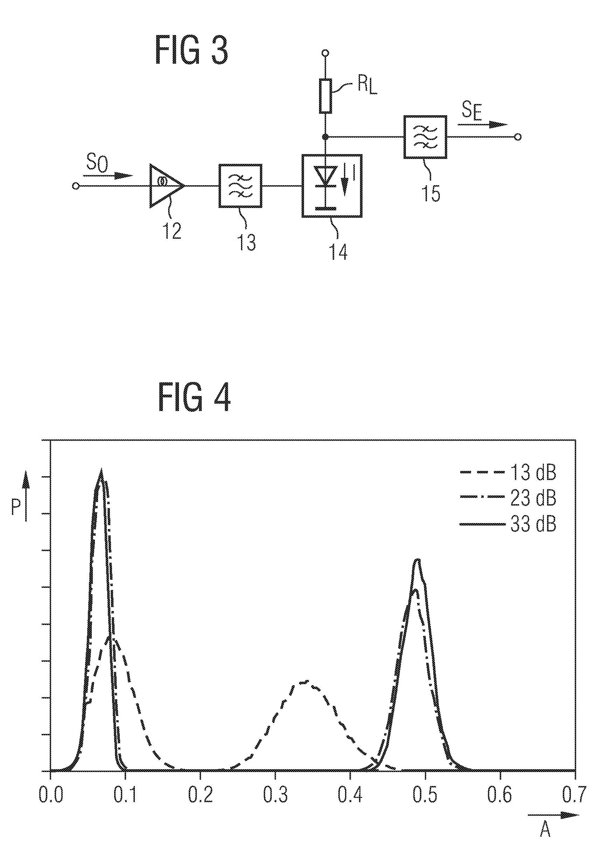

In Figur 3 ist eine Eingangsstufe eines optischen Empfängers als Prinzipschaltbild dargestellt. Dieses enthält einen optischen Vorverstärker 12, ein optisches Filter 13, einen opto-elektrischen Wandler 14 und ein elektrisches Filter 15, das die elektrische Bandbreite bestimmt.

Dem optischen Vorverstärker 12 wird das optische Signal $S_O$ zugeführt, dort verstärkt und anschließend durch das Filter 13 in seiner Bandbreite begrenzt. Nach der Umsetzung in ein elektrisches Spannungssignal $S_E$ wird dieses durch ein elektrisches Filter 15 bandbegrenzt (die Bandbegrenzung kann durch Schaltungselemente erfolgen).

Bei den folgenden Betrachtungen werden die Abtastwerten entsprechenden Ströme der Photodiode verwendet. Das zu messende (z. B. empfangene) Signal $S_E$ besteht aus dem Datensignal und einem Rauschanteil.

Der dem Signal entsprechende Photostrom $I_E = I_S + \Delta I$ eines Photodetektors bzw. opto-elektrischen Wandlers ist die Summe aus dem (Nutz-) Datensignalanteil $I_S = \Re P_v$ (AA) und dem Rauschanteil $\Delta I$.

Der Datensignalanteil $I_S$ ist seinerseits abhängig von der Detektorempfindlichkeit $\Re = \eta q/hV$ (mit $\eta$ = Quanteneffizienz, q = Elementarladung, h = Wirkungsquantum, V = Frequenz des Signals) und der verstärkten Signalleistung $P_v = GP_S + P_{sp}$. Die Signalleistung P setzt sich wiederum zusammen aus der Signalleistung $P_S$ und dem Anteil verursacht durch spontane Emission $P_{sp}$. Dabei entspricht $G$ dem Verstärkungsfaktor des optischen Verstärkers 12. Die Leistung der spontanen Emission ergibt sich mit $P_{sp} = 2S_{sp}B_{opt}$ aus deren spektralen Dichte $S_{sp}$ und der, aufgrund eines vor der Photodiode befindlichen optischen Filters 4 begrenzten optischen Bandbreite $B_{opt}$. (G.P. Agrawal, Fiber Optic Communication Systems, 2nd Edition, S. 404 bis 406)

Der Rauschanteil $\Delta I$ setzt sich aus den Anteilen thermisches Rauschen, Schrotrauschen und Rauschen aufgrund spontaner Emissionsprozesse zusammen. Die einzelnen Rauschleistungsbeiträge (Rauschstrombeiträge) oder Varianzbeiträge wie das thermisches Rauschen $\sigma_{th}^2$, das Schrotrauschen $\sigma_{Sch}^2$ und das sogenannte Schwebungsrauschen der spontanen Emission durch Mischung mit sich selbst $\sigma_{sp\text{-}sp}^2$ und mit dem Nutzsignal S $\sigma_{S\text{-}sp}^2$ summieren sich bei der Annahme einer gaußförmigen Verteilung zu einer Gesamtvarianz $\sigma^2 = \langle \Delta I^2 \rangle$ auf. (G.P. Agrawal, Fiber Optic Communication Systems, 2nd Edition, S. 404 bis 405; J. H. Winters, R. D. Gitlin, IEEE Trans. On Communication, 38, S. 1439 bis 1453)

$$\sigma^2 = \sigma_{th}^2 + \sigma_{Sch}^2 + \sigma_{sp\text{-}sp}^2 + \sigma_{S\text{-}sp}^2 \qquad (1)$$

die Bestandteile lassen sich beschreiben durch [3]:

$$\sigma_{th}^2 = 4k_B TFB_{el}/R_l \qquad (2)$$

$$\sigma_{Sch}^2 = 2q\big[\Re(GP_S + P_{sp}) + I_d\big]B_{el} \qquad (3)$$

$$\sigma_{sp-sp}^2 = 4\Re^2 S_{sp}^2 B_{opt} B_{el} \qquad (4)$$

$$\sigma_{S-sp}^2 = 4\Re^2 GP_S S_{sp} B_{el} \qquad (5)$$

Hierbei sind im einzelnen: $k_B$ die Boltzmann-Konstante, $T$ die absolute Temperatur, $F$ die Rauschzahl des optischen Verstärkers, $B_{el}$ beschreibt die elektrische Bandbreite der Photodiode, $R_l$ berücksichtigt den Ladewiderstand, $q$ ist die Elementarladung, $I_d$ der Dunkelstrom des Detektors, $S_{sp}$ die spektrale Dichte der spontanen Emission und $B_{opt}$ entspricht der optischen Bandbreite (meist durch den optischen Demultiplexer bestimmt).

Das optische Signal zu Rausch Verhältnis (OSNR) am Eingang der Photodiode wird bestimmt durch das Rauschverhalten des optischen Vorverstärkers. Das OSNR am Ausgang eines optischen Verstärkers OV kann berechnet werden durch [G.P. Agrawal, Fiber Optic Communication Systems, 2nd Edition, S. 365, 366; Yariv, Opt. Letters 1, (1990), Seite 1064 - 1064]:

$$OSNR = \frac{\langle P \rangle_{av}}{2S_{sp}B_{opt}^{OSNR}} \qquad (6)$$

mit der mittleren Signalleistung $\langle P \rangle_{av}$ und der optischen Bandbreite $B_{opt}^{OSNR}$, auf die sich der OSNR Wert bezieht. Somit lässt sich der zu messende Wert, das am Eingang der Photodiode vorliegende OSNR, in die Gleichungen (3)-(5) einbringen:

$$\sigma_{Sch}^2 = 2q\left[\Re\left(GP_S + \frac{\langle P \rangle_{av} B_{opt}}{OSNR \cdot B_{opt}^{OSNR}}\right) + I_d\right]B_{el} \qquad (7)$$

$$\sigma^2_{sp-sp} = \Re^2 \left( \frac{\langle P \rangle_{av}}{OSNR \cdot B^{OSNR}_{opt}} \right)^2 B_{opt} B_{el} \tag{8}$$

$$\sigma^2_{S-sp} = 2\Re^2 GP_S \frac{\langle P \rangle_{av}}{OSNR \cdot B^{OSNR}_{opt}} B_{el} \tag{9}$$

Die Mittelwerte $\mu_0$, $\mu_1$ und Standardabweichungen $\sigma_0$, $\sigma_1$ bzw. Varianzen $\sigma_0^2$, $\sigma_1^2$ (Quadrat der Standardabweichungen) der Gauß-Verteilungen werden jeweils für beide binären Zustände "0" und "1" bestimmt.

Den reinen Signalstromanteil $I_{S\_0,1}$=R$GP_{S\_0,1}$ in den Gleichungen (7) und (9) kann man somit durch die jeweiligen Mittelwerte $\mu_0$, $\mu_1$ ersetzen. Durch die Bildung der Differenz der Gesamtvarianz (1) der Verteilungen der "0'en" und "1'en" heben sich die von den logischen Zuständen des Datensignals entsprechenden Signalpegeln unabhängigen Beiträge (2) und (4) auf und man erhält aus (7) und (9):

$$\sigma_1^2 - \sigma_0^2 = 2q\mu_1 B_{el} + 2\Re\mu_1 \frac{\langle P \rangle_{av} B_{el}}{OSNR \cdot B^{OSNR}_{opt}} - 2q\mu_0 B_{el} - 2\Re\mu_0 \frac{\langle P \rangle_{av} B_{el}}{OSNR \cdot B^{OSNR}_{opt}}$$

$$= \left( 2qB_{el} + 2 \frac{\Re\langle P \rangle_{av} B_{el}}{OSNR \cdot B^{OSNR}_{opt}} \right)(\mu_1 - \mu_0) \tag{10}$$

und damit

$$\frac{\sigma_1^2 - \sigma_0^2}{\mu_1 - \mu_2} = 2\left( q + \frac{\Re\langle P \rangle_{av}}{OSNR \cdot B^{OSNR}_{opt}} \right) B_{el} \tag{11}$$

Die freien Parameter auf der rechten Seite von (11) müssen bekannt sein, können aber auch durch eine Referenzmessung bei bekanntem Signal-Rausch-Abstand bestimmt werden. In optisch vorverstärkten Systemen ist der Beitrag des Schrotrauschens zu vernachlässigen, so daß der Term **2q$B_{el}$** auf der rechten Seite von (11) entfallen kann. Somit ergibt sich ein vereinfachter Zusammenhang zwischen OSNR und gemessenen Mittelwerten und Varianzen:

$$10\lg\left( \frac{\mu_1 - \mu_0}{\sigma_1^2 - \sigma_0^2} \right) = 10\lg(OSNR) - 10\lg\left( \frac{2\Re\langle P \rangle_{av} B_{el}}{B^{OSNR}_{opt}} \right) \tag{12}$$

Dies entspricht einer Geradengleichung in logarithmischer Darstellung. Bei einem nur durch optisches Rauschen gestörten System kann daher durch Berechnen der charakteristischen Werte des Histogramms der Rauschabstand ermittelt werden. Der erste Term von Gleichung 12 wird im folgenden als Histogramm-Momente-Term HMT bezeichnet.

In Figur 4 sind Histogramme für verschiedene Rauschabstände angegeben. Kleinere Rauschabstände führen zu weiter auseinandergezogenen aber flacheren Maxima.

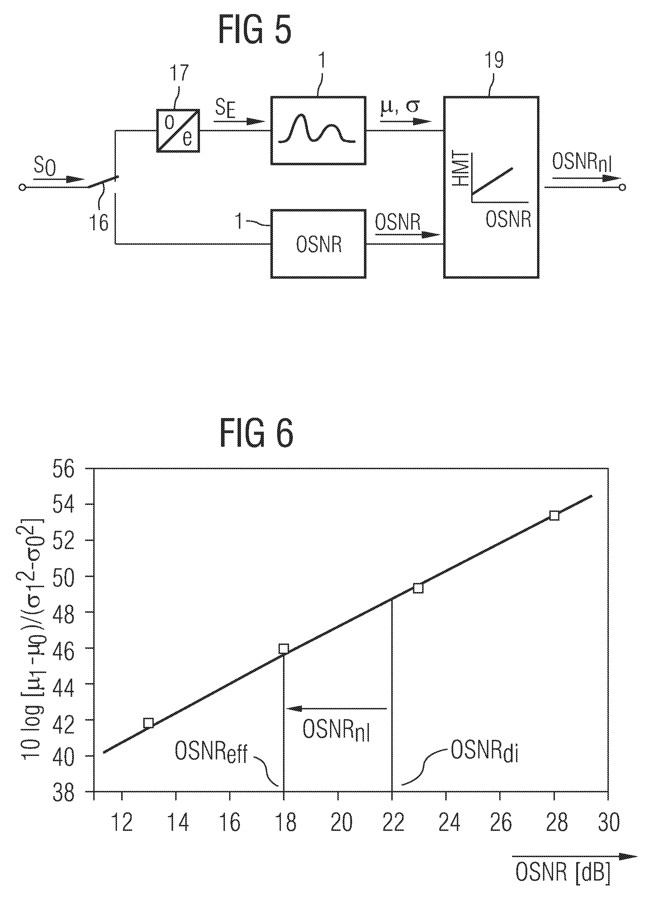

Aus den Mittelwerten $\mu_0$ und $\mu_1$ der Gauß-Verteilungen für logische 0'en und 1'en und deren Varianzen $\sigma_0^2$, $\sigma_1^2$ für verschiedene Rauschabstände kann die resultierende Gerade für die Verteilungen ermittelt werden, indem die Quadrate der Abweichungen minimiert werden. Die durch Gleichung (12) beschriebene Funktion nach ist im Rauschabstand-Histogramm-Momente-Diagramm der Figur 5 dargestellt.

Die errechnete oder durch ein Messungen ermittelte Referenzgerade kann zur Auswertung aktueller Histogramme verwendet werden.

Bei einem von nichtlinearen Effekten (und sonstigen die Amplitudenhistogramme nicht beeinflussenden Effekten außer Rauschen) freien System kann daher durch Messen der charakteristischen Werte des Histogramms der Signal-Rausch-Abstand anhand der Referenzgeraden ermittelt werden. Messungen bei verschiedenen Signalpegeln bzw. Rauschabständen werden, von Meßfehlern bzw. Ungenauigkeiten abgesehen, alle auf der Referenzgeraden liegen.

Es ist in der Regel nicht bekannt, ob nichtlineare Effekte auftreten, die das Histogramm beeinflussen und den "effektiven" Rauschabstand verringern. Deshalb wird das Verfahren exakter als Ermittlung des effektiven Signal-Rausch-Abstandes $OSNR_{eff}$ bezeichnet. Fehlen die störenden (nichtlinearen) Effekte einschließlich Übersprechen zwischen mehreren Kanälen, so ergibt die Messung direkt den Signal-Rausch-Abstand Wie vorstehend erwähnt, wirken sich aufgrund der statistischen Eigenschaften einiger nichtlinearer Effekte diese wie ein zusätzlicher Rauschbeitrag $\sigma^2_{nl}$ aus, der in dem Amplitudenhistogramm eine erhöhte effektive Varianz $\sigma^2_{eff}$ ergibt:

$$\sigma^2_{eff} - \sigma^2_{th} + \sigma^2_{Sch} + \sigma^2_{sp\text{-}sp} + \sigma^2_{S\text{-}sp} + \sigma^2_{nl} \tag{13}$$

Der gesamte "effektive Signal-Rausch-Abstand" $OSNR_{eff}$ kann folglich über die Mittelwerte $\mu_0$ und $\mu_1$ sowie die Varianzen $\sigma_0^2$ und $\sigma_1^2$ der Amplitudenverteilungen der "0'en" und "1'en" ermittelt werden und der Rauschanteil der nichtlinearen Effekte (bei Mehrkanalsystemen ebenfalls Übersprechen) durch Vergleich mit den berechneten Werten eines keine nichtlinearen bzw. störenden Effekte aufweisenden Systems ermittelt werden.

Anstelle einer Berechnung kann ein direktes Messen des optischen Signal-Rausch-Abstandes $OSNR_{di}$ erfolgen. In Figur 6 ist eine entsprechende Anordnung dargestellt. Diese enthält die schon beschriebene Messeinrichtung 1 und eine weitere Rauschabstands-Messeinrichtung 18 sowie eine Vergleichseinrichtung 19 zur Auswertung der Meßwerte.

Das binäre optische Signal $S_O$ wird zunächst über einen Schalter 16 und einen opto-elektrischen Wandler 17 der Meßeinrichtung 1 zugeführt, die das Amplituden-Histogramm aufnimmt und die Histogramm-Momente ermittelt. Dann erfolgt die direkte Messung des optischen Signal-Rausch-Abstandes OSNR durch die Rauschabstands-Messeinrichtung 18 (optischer Spektrum-Analysator), wobei alle bekannten Meßmethoden angewendet werden können und gegebenenfalls zumindest die Übertragung einiger Signale unterbrochen wird. In der Vergleichseinrichtung 19 werden die Messergebnisse ausgewertet.

Stimmt der aus dem Histogramm ermittelte Wert auf der Referenzgeraden mit dem direkt gemessenen des optischen Signal-Rausch-Abstand überein, sind keine störenden Effekte vorhanden. Liegt dagegen der aus den Histogramm-Momenten ermittelte Wert auf der Referenzgeraden in Figur 5 links unterhalb des direkt gemessenen Signal-Rausch-Abstandes $OSNR_{di}$, dann ist die Differenz $OSNR_{nl}$ durch zusätzliche Störeffekte verursacht und es kann nach den Ursachen wie Kreuzphasenmodulation (XPM), Vier-Wellen-Mischung (FWM), stimulierter Raman Übersprechen (SRS-XT) und koherentes/inkoherentes Übersprechen (XT) sowie weiteren Ursachen wie Selbstphasenmodulation (SPM) und Polarisationsmodendispersion (PMD) gesucht werden.

Die Ermittlung des Signal-Rausch-Abstandes muß nicht, wie bereits erwähnt, anhand einer Darstellung nach Figur 5 erfolgen, sondern kann auch anhand von nicht logarithmischen Diagrammen, Tabellen oder anhand der berechneten Werte usw. durchgeführt werden.

Zu ergänzen ist noch, daß die Histogramme und damit die Ermittlungen des Signal-Rausch-Abstands von der Dispersion weitgehend unabhängig sind.

Bezugszeichenliste

| | |
|---|---|
| IN | Datensignaleingang |
| 1 | Meßeinrichtung |
| 2 | Entscheiderstufe |
| 3 | Entscheiderstufe |
| 4 | Abtastkippstufe |
| 5 | Abtastkippstufe |
| 6 | Taktgenerator |
| 7 | Exclusive-OR-Gatter |
| 8 | Fehlerzähler |
| 9 | Rechenschaltung |

10      Histogrammrechner
11      Steuerung
12      Vorverstärker
13      optisches Filter
14      Photodiode (opto-elektrischer Wandler)
15      elektrisches Filter
16      Schalter
17      opto-elektrischer Wandler
18      Rauschabstands-Meßeinrichtung
19      Vergleichseinrichtung
$S_E$      Signal
DO      Datensignalausgang
HO      Histogramm-Ausgang

**Patentansprüche**

1.    Verfahren zur Ermittlung der Signalqualität bei optischen Übertragungssystemen durch Messen eines Amplitudenhistogramms eines Signals ($S_E$),
     **dadurch gekennzeichnet,**
     **daß** der effektive Signal-Rausch-Abstand ($OSNR_{eff}$) durch Berechnen von charakteristischen Histogramm-Momenten ($\mu_0$ und $\mu_1$, $\sigma_0$ und $\sigma_1$) und durch Zuordnung der charakteristischen Histogramm-Momente ($\mu_0$ und $\mu_1$, $\sigma_0$ und $\sigma_1$) zum optischen Signal-Rausch-Abstand (OSNR) eines durch weitere Störeffekte nicht beeinträchtigten Übertragungssystems ermittelt wird.

2.    Verfahren zur Ermittlung der Signalqualität bei optischen Übertragungssystemen durch Messen eines Amplitudenhistogramms (VD, VF, VS0) eines Signals ($S_E$),
     **dadurch gekennzeichnet,**
     **daß** zur Ermittlung der Signalqualität die charakteristischen Histogramm-Momente ($\mu_0$ und $\mu_1$, $\sigma_0$ und $\sigma_1$) berechnet werden, daß der optische Signal-Rausch-Abstand ($OSNR_{di}$) direkt gemessen wird, daß ein Vergleich der charakteristischen Histogramm-Momente ($\mu_0$ und $\mu_1$, $\sigma_0$ und $\sigma_1$) mit dem gemessenen optischen Signal-Rausch-Abstandes ($OSNR_{di}$) durchgeführt wird und daß bei Nichtübereinstimmung der Anteil nichtlinearen Rauschens ($OSNR_{nl}$) ermittelt wird.

3.    Verfahren nach Anspruch 1 oder 2,
     **dadurch gekennzeichnet,**
     **daß** die Differenzen der Mittelwerte ($\mu_1$-$\mu_0$) von als Gauss-Verteilung angesehenen Amplitudenverteilungen für die logischen "1'en" und die logischen "0'en" ermittelt werden, daß die Differenzen der Varianzen ($\sigma_1^2 - \sigma_0^2$) der Amplitudenverteilungen für die logischen "Einsen" und die logischen "Nullen" ermittelt werden und daß ein Histogramm-Momente-Term

$$\left( \frac{\mu_1 - \mu_0}{\sigma_1^2 - \sigma_0^2} \right)$$

     -     oder der Kehrwert - durch Bildung eines Quotienten aus beiden Differenzen ermittelt wird.

4.    Verfahren nach Anspruch 1 oder 2,
     **dadurch gekennzeichnet,**
     **dass** als Amlitudenhistogramm eine Fehlerraten-Verteilung (VF) in Abhängigkeit von einer variablen Abtastschwelle (S2) gemessen wird oder dass die Verteilungsdichte (VSO) von logischen Nullen oder logischen Einsen in Abhängigkeit von der variablen Abtastschwelle (S2) gemessen wird oder dass die Wahrscheinlichkeitsdichte-Verteilung (VD) der Abtastamplituden der logischen Nullen und Einsen direkt gemessen wird und dass jeweils die charakteristischen Histogrammwerte ($\mu_0$ und $\mu_1$, $\sigma_0$ and $\sigma_1$) ermittelt werden.

5.    Verfahren nach Anspruch 1, 2 oder 3,

**dadurch gekennzeichnet,**
**dass** entsprechende charakteristische Histogramm-Momente ($\mu_0$ und $\mu_1$, $\sigma_0$ und $\sigma_1$) in Abhängigkeit vom Signal-Rausch-Abstand ohne Streckeneinflüsse realisiertes Übertragungssystem errechnet oder gemessen werden.

**6.** Verfahren nach Anspruch 1, 2 oder 3,
**dadurch gekennzeichnet,**
**dass** die charakteristischen Histogramm-Momente ($\mu_0$ und $\mu_1$, $\sigma_0$ und $\sigma_1$) in Abhängigkeit vom Signal-Rausch-Abstand ohne Streckeneinflüsse für ein optimales System errechnet oder gemessen werden.

**7.** Verfahren nach Anspruch 4 oder 5 ,
**dadurch gekennzeichnet,**
**dass** die charakteristischen Histogramm-Momente ($\mu_0$ und $\mu_1$, $\sigma_0$ und $\sigma_1$) und zugehörige Signal-Rausch-Abstände gespeichert werden.

**8.** Verfahren nach Anspruch 3 oder Anspruch 4,
**dadurch gekennzeichnet,**
**dass** die Funktion der charakteristischen Histogramm-Momente ($\mu_0$ und $\mu_1$, $\sigma_0$ und $\sigma_1$) in Abhängigkeit vom Rauschabstand gespeichert wird.

**9.** Verfahren nach einem der vorhergehenden Ansprüche,
**dadurch gekennzeichnet,**
**dass** der Zusammenhang zwischen charakteristischen Histogramm-Momente ($\mu_0$ und $\mu_1$, $\sigma_0$ und $\sigma_1$) und Rauschabstand (OSNR) anhand folgender Gleichung - einschließlich mathematischer Umformungen - ermittelt wird:

$$10\,\lg\left(\frac{\mu_1 - \mu_0}{\sigma_1^2 - \sigma_0^2}\right) = 10\,\lg(\mathrm{OSNR}) - 10\,\lg\left(\frac{2\Re\langle P\rangle_{av}\,B_{el}}{B_{opt}^{OSNR}}\right)$$

beziehungsweise

$$\left(\frac{\mu_1 - \mu_0}{\sigma_1^2 - \sigma_0^2}\right) = (\mathrm{OSNR})\left/\left(\frac{2\Re\langle P\rangle_{av}\,B_{el}}{B_{opt}^{OSNR}}\right)\right.$$

($\mu_0$ und $\mu_1$ - Mittelwerte der Amplitudenverteilung der log. "1'en" und "0'en",
$\sigma_0$ und $\sigma_1$ - Standardabweichungen der Amplitudenverteilung der log. "1'en" und "0'en",
$\langle P\rangle_{av}$ - mittlere Signalleistung,
$\boldsymbol{B}^{OSNR}$ - optische Bandbreite,
$\boldsymbol{B_{el}}$ - elektrische Bandbreite der Photodiode/des opto-elektrischen Wandlers,
$\Re = \eta\boldsymbol{q}/\boldsymbol{hv}$ **-** Detektorempfindlichkeit ($\eta$ = Quanteneffizienz,
q = Elementarladung, h = Wirkungsquantum, V = Frequenz des Signals).

**10.** Verfahren nach einem der vorhergehenden Ansprüche,
**dadurch gekennzeichnet,**
**daß** der dritte Term

$$\left(\frac{2\Re\langle P\rangle_{av}\,B_{el}}{B_{opt}^{OSNR}}\right)$$

der Gleichung durch Messen ermittelt wird.

FIG 1

FIG 2

## FIG 3

## FIG 4

# FIG 5

# FIG 6